# EUROPEAN PATENT APPLICATION

(11) **EP 1 085 781 A2**
(43) Date of publication of application: **21.03.2001**
(21) Application number: 00119084.2
(22) Date of filing: 02.09.2000
(51) Int. Cl.: H04R 3/00, G10L 15/20

(54) **Apparatus for adapting the directional characteristic of microphones for voice control**

(30) Priority: 14.09.1999 DE 19943872
(71) Applicant: DEUTSCHE THOMSON-BRANDT GMBH, 78048 Villingen-Schwenningen (DE)
(72) Inventor: Schröder, Ernst F., 30655 Hannover (DE)
(74) Representative: Rittner, Karsten, Dr.

(57) **Abstract**

Voice control systems are used in diverse technical fields. In this case, the spoken words are firstly detected, usually by one or more microphones (M1, M2) and then fed to a speech recognition system (REC), which determines from the detected signals those words having the highest probability. The robustness with respect to acoustic interfering influences can be increased by the microphone being fastened or held directly in front of the speaker's mouth. The invention enables voice control even from a relatively large distance by virtue of the fact that interfering background noises are spatially separated by the use of directional microphones or microphone arrays (M1, M2). In this case, the directional characteristic is adapted by virtue of the fact that means for detecting the whereabouts of the user (IR1, VR, CIR) are provided. One or more infrared motion detectors are preferably used for this purpose.

## Description

The invention relates to an apparatus for adapting the directional characteristic of microphones for voice control, which can be utilized in particular for controlling appliances appertaining to consumer electronics.

### Prior art

Voice control systems are used in a multiplicity of technical fields. In this case, the spoken words are firstly detected as sound signals, usually by one or more microphones, and then fed to a speech recognition system. In this case, the speech recognition is usually based on an acoustic model and a speech model. The acoustic model utilizes a large number of speech patterns, mathematic algorithms being used to indicate the words which acoustically best match a spoken word. The speech model in turn is based on an analysis which uses a multiplicity of document samples to ascertain the context in which, and how often, certain words are normally used. Such speech recognition systems make it possible to recognize not only individual words but also fluently spoken sentences with high recognition rates. However, the recognition rate drops drastically when non-negligible background noises are present.

The robustness with respect to such acoustic interfering influences can be increased in various ways. Thus, in dictation systems for computers, a microphone on a headset frame is fastened directly in front of the speaker's mouth. In these systems, a very constant signal and hence an, in some instances, appreciable recognition rate can be achieved only by the direct proximity to the mouth. It is likewise known to control a television set by speaking the operational commands into the microphone which is integrated in a remote control. However, the remote control must be held directly in front of the user's mouth in this case as well.

### Invention

The invention is based on the object of specifying an apparatus for voice control which enables sufficient interference immunity even in the event of voice input from a relatively great distance. This object is achieved by means of the apparatus specified in Claim 1.

In order to enable voice control even from a relatively great distance, the voice signal must be separated from interfering background signals. This can be effected by spatial separation using directional microphones or microphone arrays comprising two or more microphones. However, if the intention is to allow the user to move freely in the room during the voice input, instead of the said user being restricted to a limited area, e.g. centrally in front of the appliance, then the directional characteristic of these microphone arrays must be adapted. The microphone signals themselves could be used for this adaptation. In this case, the presence of a corresponding signal must firstly be detected, and then the microphone array can be correspondingly adapted, and only afterwards can satisfactory speech recognition begin. However, this process sequence may require a number of seconds and thus means that the first syllables or even words cannot be recognized.

In principle, the invention's apparatus for voice-activated remote control comprises one or more microphones for converting voice commands into electrical signals and a speech recognition unit for converting these electrical signals into operational commands, and also means for detecting the whereabouts of the user, which yield a signal which can be used for adapting the directional characteristic of the microphone or microphones to the whereabouts of the user.

The use of a separate detection means has the advantage that fast detection of the whereabouts of the user also always enables the first syllables or words of a command to be detected and recognized. In principle, any sufficiently fast detection means is suitable for this purpose.

The means for detecting the whereabouts of the user advantageously have one or more infrared motion detectors.

Likewise, it may be advantageous if the means for detecting the whereabouts of the user have electrical contacts in addition to the infrared motion detectors or instead of the infrared motion detectors.

Preferably, a directional microphone may also be provided which is oriented to the whereabouts of the user.

The apparatus according to the invention is particularly advantageously integrated in a consumer electronics appliance.

### Drawing

An exemplary embodiment of the invention is described with reference to the drawing.

The said drawing shows an arrangement for voice control according to the invention.

### Exemplary embodiments

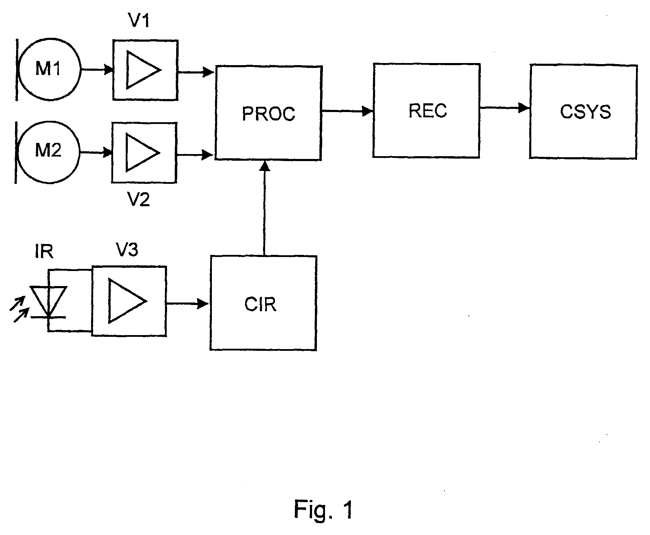

Fig. 1 schematically illustrates an apparatus according to the invention as it may be integrated e.g. in a television set, video recorder or DVD player. In order to detect the position of a user before the latter has issued a use command, an infrared position detector is provided. The latter is based on the principle that the intensity of the infrared radiation radiated by an object or a person depends on the respective temperature. The infrared position detector comprises a multiplicity of infrared detectors IR, which are known to the person skilled in the art and are not, therefore, described in any further detail, since a single detector can determine only the presence or motion of a user, but not position. Depending on the requirements made of the resolution, the arrangements may involve a plurality of individual detectors or an array of the kind also used for infrared or thermal image cameras. In this case, the observation range can be influenced by a lens or lens combination (not illustrated). The electrical signals obtained from the infrared radiation by the infrared detectors are then amplified by an amplifier V3 and pass to a control unit CIR, which determines from the detected signals the whereabouts and, if appropriate, also the direction of motion of the user.

For the detection of the voice signals, a microphone array comprising two microphones M1 and M2 is provided. The latter convert the detected sound signals into electrical signals which are firstly amplified by amplifiers V1 and V2 and are then fed to a signal processing unit PROC. The latter then takes account of the respective whereabouts of the user by means of different scaling or processing of the detected sound signals. The signal processed in this way is then fed to a speech recognition unit REC, which converts the electrical signals into words. Finally, the commands corresponding to these words are then fed to a system manager CSYS for controlling the system.

In a microphone array comprising two microphones, the two microphones may advantageously be accommodated on the left-hand and right-hand sides of the housing of the respective appliance. However, the microphone array is in no way restricted to two microphones, but rather may also have more than two microphones. Likewise, it is also possible to use a directional microphone having a pronounced directional characteristic, which is then rotated depending on the detected whereabouts of the user.

It is advantageous that, in a basic setting, it is possible to implement an orientation in the direction of the entrance area of the room in which the appliance is situated. The appliance is thus immediately ready for use as soon as a user enters the room.

If a plurality of possible users are detected, then various procedures are conceivable. By way of example, the directional characteristic can always be adapted to the user detected first, so that the microphone array as it were follows this user. Likewise, the microphone array may also follow that user who performs a voice input first. Furthermore, it is also possible to effect a regular changeover of the orientation between the various possible users. Finally, the size of the detected objects can be evaluated in order, in this way, to prevent an orientation to the user's pets from being carried out.

Furthermore, it is conceivable to detect the user entering the room by means of contacts on the door or on the light switches, instead of by means of the infrared detector. Finally, a combination of such contacts with infrared detection is also possible.

In accordance with a further embodiment, the detection means may be continuously activated with appliances switched off. If a user is then detected, then firstly only the directional characteristic of the microphones is adapted and the speech recognition unit is switched on. If a use command, in particular a command for switching on the appliance to be controlled, then ensues, the remaining functional groups of the appliance are also activated. In this way, the appliance is continuously ready for use with merely a low power output demand of the appliance.

The invention can be used for the voice-activated remote control of a wide variety of appliances appertaining to consumer electronics, such as e.g. of TV sets, video recorders, DVD players, satellite receivers, TV/video combinations, audio devices or complete audio systems, likewise of personal computers or of domestic appliances.

## Claims

1. Apparatus for voice-activated remote control, having one or more microphones (M1, M2) for converting voice commands into electrical signals and having a speech recognition unit (REC) for converting these electrical signals into operational commands, **characterized** in that means for detecting the whereabouts of the user (IR, V3, CIR) are provided, which yield a signal which can be used for adapting the directional characteristic of the microphone or microphones to the whereabouts of the user.

2. Apparatus according to Claim 1, **characterized** in that the means for detecting the whereabouts of the user have one or more infrared motion detectors.

3. Apparatus according to Claim 1 or 2, **characterized** in that the means for detecting the whereabouts of the user have electrical contacts.

4. Apparatus according to one of the preceding claims, **characterized** in that a directional microphone is provided which is oriented to the whereabouts of the user.

5. Consumer electronics appliance having an apparatus according to one of the preceding claims.
